# EUROPEAN PATENT SPECIFICATION

(11) **EP 1 422 868 B1**
(45) Date of publication and mention of the grant of the patent: **14.03.2007**
(21) Application number: 03255622.7
(22) Date of filing: 09.09.2003
(51) Int. Cl.: H04L 12/24, H04L 29/06

(54) **Rolling history display of multi-slot channel contents**
Abrollende Zeitverlaufsanzeige von Multi-Slot Kanalinhalten
Affichage défilant de l'histoire des contenus relatifs à un canal multi-emplacement

(30) Priority: 18.09.2002 US 246924
(43) Date of publication of application: 26.05.2004
(73) Proprietor: TEKTRONIX, INC., Beaverton, OR 97077 (US)
(72) Inventor: Engholm, Kathryn A., Beaverton, Oregon 97008 (US)
(74) Representative: Molyneaux, Martyn William

(56) References cited:
- US-A- 6 112 015
- US-B1- 6 219 050
- DONAHOO M J ET AL: "Multiple-channel multicast scheduling for scalable bulk-data transport" INFOCOM '99. EIGHTEENTH ANNUAL JOINT CONFERENCE OF THE IEEE COMPUTER AND COMMUNICATIONS SOCIETIES. PROCEEDINGS. IEEE NEW YORK, NY, USA 21-25 MARCH 1999, PISCATAWAY, NJ, USA,IEEE, US, vol. 2, 21 March 1999 (1999-03-21), pages 847-855, XP010323777 ISBN: 0-7803-5417-6
- MERWE VAN DER J ET AL: "MMDUMP: A TOOL FOR MONITORING INTERNET MULTIMEDIA TRAFFIC" COMPUTER COMMUNICATION REVIEW, ASSOCIATION FOR COMPUTING MACHINERY. NEW YORK, US, vol. 30, no. 5, October 2000 (2000-10), pages 48-59, XP001066104 ISSN: 0146-4833
- TRAUBERG M ET AL: "DIE PROTOKOLLANALYSE . EINE NEUE ANFORDERUNG AN DIE TV-MEssTECHNIK BEI EINFUHRUNG VON MPEG-2 UND DVB" FERNSEH UND KINOTECHNIK, VDE VERLAG GMBH. BERLIN, DE, vol. 50, no. 10, October 1996 (1996-10), pages 570-572,576, XP000641202 ISSN: 0015-0142

## Description

### BACKGROUND OF THE INVENTION

The present invention relates to the display of time-division multiplexed communications signals, and more particularly to a rolling history display of multi-slot channel contents for viewing channel contents over a period of time.

In a time-division multiplexed communications signal, such as T1 or E1 telephony, there are multiple data streams packaged into a single physical channel. For example a single T1 carrier in a residential neighborhood may be carrying a control channel, many voice communications, a few modem sessions and some idle channels on its twenty-four (24) time slots or channels at a given instant in time. Many other content types and combinations are also possible and may exist on the same T1 carrier at some other given instant in time. An operator, simply looking at the electrical signal on the T1 line, cannot interpret what content types are present in the various channels or even whether any or all of the channels are working correctly.

Current methods for examining the channels - time slots in the case of T1 and E1 telephony carriers - allow the operator to examine any or all of the channels at a single point in time to determine whether it contains the correct content type and is operating properly. Protocol analyzers are a typical instrument for this purpose. The common method for displaying the information to the operator is to write the channel data as text on a screen or in a file. More recently, as exemplified by the Tektronix K1205 Protocol Testers' graphical display called "PCMCheck", small graphic icons may be used instead of text to indicate what content type is found in each channel of a T1 or E1 carrier. This is an improvement in usability, but doesn't address the problem that only the information from a single point in time is viewed.

As users frequently need to know what happened in the past or over some period of time in order to understand why some later event occurred, what is desired is a way to compress the information from series of time points into a single, useful view for display.

### BRIEF SUMMARY OF THE INVENTION

Accordingly the present invention provides a rolling history display of multi-slot channel contents that displays the contents for all channels from an acquisition record at a single point in time as a line of icons. Each new acquisition record is added as another line of icons to the display, with the initial line of icons shifted to make room for the new line. This repeats for a period of time specified by an operator, showing the operator a continuous stream of graphical information for each channel across the period of time.

The objects, advantages and other novel features of the present invention are apparent from the following detailed description when read in conjunction with the appended claims and attached drawing.

### BRIEF DESCRIPTION OF THE SEVERAL VIEWS OF THE DRAWING

Fig. 1 is a block diagram view of a typical instrument that provides a rolling history display according to the present invention.
Fig. 2 is a flow diagram view for the instrument of Fig. 1 that generates the rolling history display according to the present invention.
Fig. 3 is a plan view of a screen for the instrument of Fig. 1 illustrating the rolling history display according to the present invention.

### DETAILED DESCRIPTION OF THE INVENTION

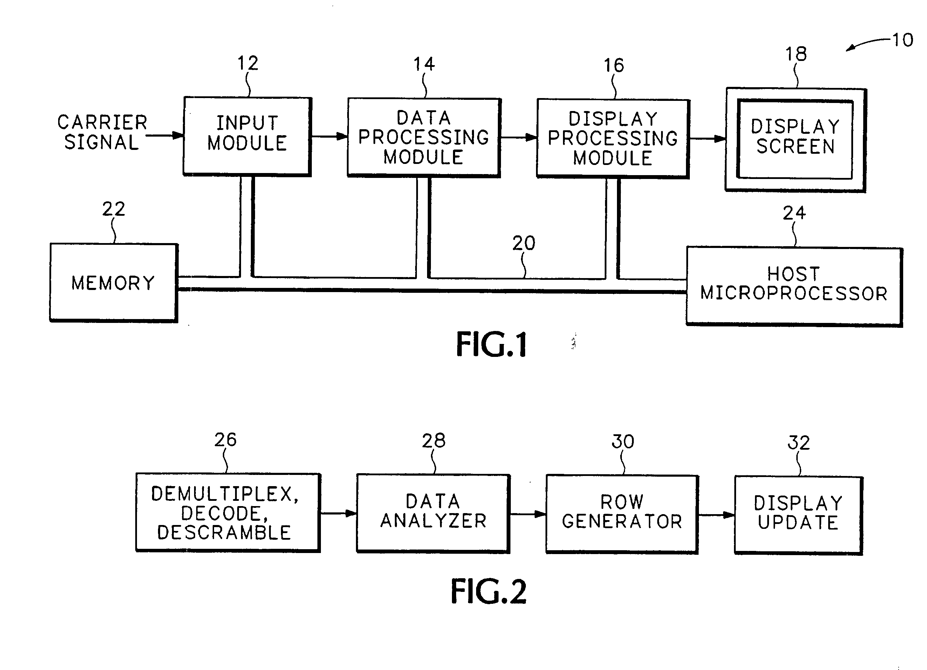

Referring now to Fig. 1 an instrument 10 has as an input a communications or carrier signal having multiple channels of information. Such an input stream may include T1 or E1 telephony having multiple channels or a Motion Picture Experts Group (MPEG) Transport Stream which has multiple programs containing elementary streams. The input signal is demultiplexed, decoded and descrambled, as necessary according to the communication protocol being used, in an input module 12 to produce individual channels or streams. The individual channels or streams are input to a data processing module 14 where information about each channel or stream is extracted, such as channel or program identification, type of information or other data. The extracted data for each channel is then input to a display processing module **16** for appropriate display formatting. The formatted data is then provided on a display screen **18** for viewing by an operator. The input module **12,** data processing module **14** and display processing module **16** may be coupled via a conventional computer bus **20** to appropriate memory devices **22** and a host control processor **24.**

As shown in Fig. 2 the input signal is broken down into its individual channels or programs (step **26**), and then each channel or program is analyzed (step **28**) to extract the desired data, such as type of information in the channel or stream. These first two steps are implicit in any communications signal analyzer. Next a display line is created (step **30**) for the input signal with an icon in each channel slot, the icon based upon the type of information in the channel. Then (step **32**) the current display is updated by adding the new line to the display, moving the already existing lines, if any, to make room for the new line, and removing the oldest line from the display when the display is full.

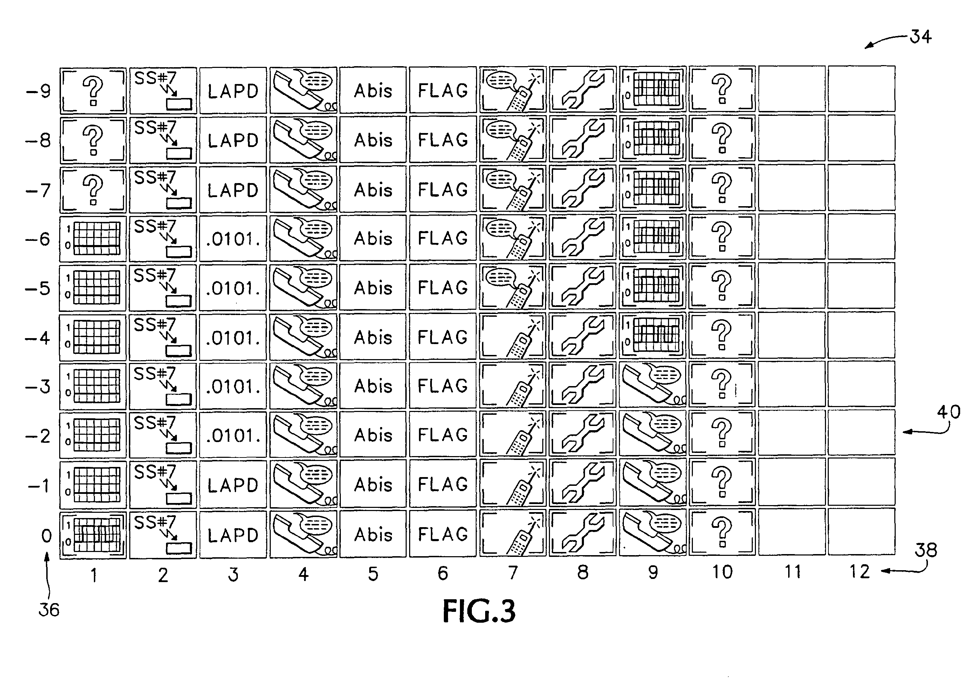

The resulting display **34** is shown in Fig. 3 where acquisition records are indicated along the left-hand, vertical axis **36** and channel or program numbers **38** are indicated or inferred along the bottom, horizontal axis. Only 10 records of data are shown for this illustration, each represented by a row of icons. For a T1 or E1 carrier each row would contain 24 or 32 icons, respectively. For an MPEG Transport Stream the number of icons per row depends upon the number of programs found or specified manually by the operator. Each line **40** has the appropriate icon in each channel indicative of the content or data for that channel. As shown the bottom row represents the most current data and the top row shows the oldest data. In the earliest measurements for channel 1 the protocol analysis software of the data processing module **14** determined that the content was some unknown type of TRAU (Transcoding Rate Adaption Unit) frame. Later at time -6 the content is determined to be an idle pattern and is represented by an idle icon. Finally at the current measurement the content is detected as TRAU User Data, represented by a data icon. Seeing this the operator may be able to correlate the change from UNKNOWN to IDLE to some external event, helping an understanding of the system response. This display may be used to watch for correlation between channels in the same carrier, or to roughly measure the duration of some condition within one or more channels.

The icons shown in this representation may be related to telephony protocols, but there are an infinite number of icons that could be designed to represent various properties of the channel contents and/or format. This display pertains to other types of encoded, multi-channel carriers outside of the telephony domain, such as program information about elementary streams within an MPEG Transport Stream over time, as indicated above. The display presents a time history of the input signal for each channel of the input carrier using appropriate icons to indicate channel content, the information being updated with each new acquisition.

Although illustrated in Fig. 3 as being displayed as horizontal rows with the records moving vertically as new records are added, the records may be displayed as vertical columns with the records moving horizontally as new records are added.

Thus the present invention provides a rolling history display of multi-channel contents for an input carrier or signal by extracting content information for each channel of a multi-channel carrier signal at a point in time, generating from the content information a line of icons, one icon for each channel that is representative of the content information for that channel, displaying the line of icons together with prior lines of icons representing prior points in time, and repeating the steps for each subsequent point in time.

## Claims

1. An apparatus for providing a rolling history display of the contents of each channel in a multi-channel carrier signal comprising:
means for extracting content information for each channel at a point in time;
means for generating a line of icons for the content information, each icon in the line corresponding to one of the channels of the multi-channel carrier signal and uniquely representing the corresponding content information; and
means for updating the rolling history display by adding the line to prior lines representing prior points in time for the multi-channel carrier signal.

2. A method of providing a rolling history display of the contents of each channel in a multi-channel carrier signal comprising:
extracting content information for each channel at a point in time;
generating a line of icons for the content information, each icon in the line corresponding to one of the channels of the multi-channel carrier signal and uniquely representing the corresponding content information; and
updating the rolling history display by adding the line to prior lines representing prior points in time for the multi-channel carrier signal.

## Patentansprüche

1. Vorrichtung zum Bereitstellen einer abrollenden Verlaufsanzeige der Inhalte jedes Kanals in einem Mehrkanal-Trägersignal, wobei die Vorrichtung folgendes umfasst:
eine Einrichtung zum Extrahieren von Inhaltsinformationen für jeden Kanal zu einem Zeitpunkt;
eine Einrichtung zum Erzeugen einer Symbolzeile für die Inhaltsinformationen, wobei jedes Symbol in der Zeile einem der Kanäle des Mehrkanal-Trägersignals entspricht und eindeutig die entsprechenden Inhaltsinformationen darstellt; und
eine Einrichtung zum Aktualisieren der ablaufenden Verlaufsanzeige durch das Hinzufügen der Zeile zu vorherigen Zeilen, die vorherige Zeitpunkte für das Mehrkanal-Trägersignal darstellen.

2. Verfahren zum Bereitstellen einer abrollenden Verlaufsanzeige der Inhalte jedes Kanals in einem Mehrkanal-Trägersignal, wobei das Verfahren folgendes umfasst:
das Extrahieren von Inhaltsinformationen für jeden Kanal zu einem Zeitpunkt;
das Erzeugen einer Symbolzeile für die Inhaltsinformationen, wobei jedes Symbol in der Zeile einem der Kanäle des Mehrkanal-Trägersignals entspricht und eindeutig die entsprechenden Inhaltsinformationen darstellt; und
das Aktualisieren der ablaufenden Verlaufsanzeige durch das Hinzufügen der Zeile zu vorherigen Zeilen, die vorherige Zeitpunkte für das Mehrkanal-Trägersignal darstellen.

## Revendications

1. Appareil pour fournir un affichage défilant de l'historique des contenus de chaque canal dans un signal porteur multicanal comprenant:
des moyens pour extraire les informations de contenu pour chaque canal à un point dans le temps;
des moyens pour générer une ligne d'icônes pour les informations de contenu, chaque icône dans la ligne correspondant à l'un des canaux du signal porteur multicanal et représentant de manière unique les informations de contenu correspondantes ; et
des moyens pour mettre à jour l'affichage défilant de l'historique en ajoutant la ligne aux précédentes lignes représentant de précédents points dans le temps pour le signal porteur multicanal.

2. Procédé pour fournir un affichage défilant de l'historique des contenus de chaque canal dans un signal porteur multicanal comprenant les étapes consistant à :
extraire les informations de contenu pour chaque canal à un point dans le temps ;
générer une ligne d'icônes pour les informations de contenu, chaque icône dans la ligne correspondant à l'un des canaux du signal porteur multicanal et représentant de façon unique les informations de contenu correspondantes ; et
mettre à jour l'affichage défilant de l'historique en ajoutant la ligne aux précédentes lignes représentant de précédents points dans le temps pour le signal porteur multicanal.
